# EUROPEAN PATENT APPLICATION

(11) **EP 2 772 382 A1**
(43) Date of publication of application: **03.09.2014**
(21) Application number: 11874818.5
(22) Date of filing: 26.10.2011
(51) Int. Cl.: B60L 9/18, B60K 6/445, B60W 10/06, B60W 10/08, B60W 20/00

(54) **VEHICLE AND METHOD FOR CONTROLLING VEHICLE**

(71) Applicant: Toyota Jidosha Kabushiki Kaisha, Toyota-shi, Aichi 471-8571 (JP)
(72) Inventor: AMANO, Takashi, Toyota-shi Aichi 471-8571 (JP)
(74) Representative: TBK
(86) International application number: PCT/JP2011/074623
(87) International publication number: WO 2013/061414

(57) **Abstract**

A vehicle (100) includes a motor generator (130) generating driving power for running, and an ECU (300). The ECU (300) performs driving power variation operation on the motor generator (130) in which the motor generator is switched between a first state (acceleration running) and a second state (inertial running) when power requested by a user varies within a prescribed range to run the vehicle (100). In the first state, the motor generator generates driving power. In the second state, the motor generator generates driving power smaller than the driving power in the first state. The ECU (300) variably sets a time for the second state in the driving power variation operation in accordance with magnitude of the user request power. As a result, energy efficiency of the vehicle (100) is improved.

## Description

### TECHNICAL FIELD

The present invention relates to vehicles and methods of controlling the vehicles, and more particularly to running control of a vehicle running with inertial force of the vehicle.

### BACKGROUND ART

In recent years, vehicles incorporating a power storage device (such as a secondary battery or capacitor) and running with driving power generated from electric power stored in the power storage device have been receiving attention as environmentally friendly vehicles. Examples of such vehicles include an electric vehicle, a hybrid vehicle, and a fuel cell vehicle.

There is a need to improve energy efficiency of these vehicles by increasing gasoline mileage and electric mileage, so as to further reduce environmental loads.

Japanese National Patent Publication No. 2008-520485 (PTD 1) discloses a hybrid vehicle including an internal combustion engine and a motor generator, in which the motor generator is controlled, when in a generator mode, in such a manner that the motor generator alternates between a first interval and a second interval. During the first interval, the motor generator is driven to operate with a high output which is greater than an actual power consumption of a vehicle electrical system. During the second interval, the motor generator is switched off

According to Japanese National Patent Publication No. 2008-520485 (PTD 1), when the motor generator operates as a generator, the motor generator is driven at an operating point of high efficiency in the first interval and the motor generator is stopped in the second interval. As a result, continuation of the operation of the motor generator with low efficiency during operation of electric power generation can be suppressed, thus improving energy efficiency of the vehicle during the operation of electric power generation.

Japanese Patent Laying-Open No. 2009-190433 (PTD 2) discloses a vehicle including at least an engine, in which a running pattern of alternately repeating acceleration running for accelerating the vehicle by transmitting drive force from the engine and inertia running for blocking the transmission of the drive force and causing the vehicle to run through inertia is generated between a target upper limit vehicle speed and a target lower limit vehicle speed after accelerator off. Japanese Patent Laying-Open No. 2009-190433 (PTD 2) also discloses determining the target lower limit vehicle speed based on the grade of a road on which the vehicle is running and the target upper limit vehicle speed, and variably setting a vehicle speed difference.

### CITATION LIST

### PATENT DOCUMENTS

PTD 1: Japanese National Patent Publication No. 2008-520485
PTD 2: Japanese Patent Laying-Open No. 2009-190433
PTD 3: Japanese Patent Laying-Open No. 2007-187090
PTD 4: Japanese Patent Laying-Open No. 2011-036008
PTD 5: Japanese Patent Laying-Open No. 2002-227885

### SUMMARY OF INVENTION

### TECHNICAL PROBLEM

In the configuration of Japanese National Patent Publication No. 2008-520485 (PTD 1) described above, however, driving and stopping of the motor generator is repeated when the motor generator generates electric power, and the driving power for running the vehicle is not varied.

Japanese Patent Laying-Open No. 2009-190433 (PTD 2) aims at running after the accelerator off, and does not consider running when the accelerator is on and the drive force is required by a user.

The present invention has been made in order to solve such problems, and an object of the present invention is to improve energy efficiency during vehicle running in consideration of a vehicle speed, in a vehicle capable of running by using inertial force of the vehicle with varying driving power.

### SOLUTION TO PROBLEM

A vehicle according to the present invention includes a driving source generating driving power for running the vehicle, and a control device for controlling the driving source. The control device performs driving power variation operation on the driving source in which the driving source is switched between a first state and a second state when driving power requested by a user varies within a prescribed range to run the vehicle, the driving source generating driving power in the first state, the driving source generating driving power smaller than the driving power in the first state in the second state. The control device variably sets a time for the second state in the driving power variation operation in accordance with magnitude of the requested driving power.

Preferably, the control device controls the driving source such that the time per the second state is longer as the requested driving power increases.

Preferably, the control device causes switching between the first and second states so as to maintain a speed of the vehicle within an acceptable range while the driving power variation operation is performed. The control device sets the acceptable range to be wider as the requested driving power increases.

Preferably, the control device causes switching to the first state in response to a decrease in the speed of the vehicle to a lower limit value of the acceptable range, and causes switching to the second state in response to an increase in the speed of the vehicle to an upper limit value of the acceptable range.

Preferably, the control device causes switching from the second state to the first state in response to continuation of the second state for a predetermined time. The control device sets the predetermined time for the second time to be longer as the requested driving power increases.

Preferably, the control device causes switching from the first state to the second state in response to an increase in a speed of the vehicle to an upper limit value of a target speed determined based on the requested driving power.

Preferably, the control device causes switching between the first and second states so as to maintain the speed of the vehicle within an acceptable range while the driving power variation operation is performed. The control device causes switching from the first state to the second state in response to continuation of the first state for a prescribed time determined from an execution time of the second state.

Preferably, the driving power in the first state is set to be larger than reference driving power of constant output capable of maintaining a speed of the vehicle. The driving power in the second state is set to be smaller than the reference driving power.

Preferably, the control device stops the generation of the driving power from the driving source in the second state.

Preferably, the vehicle runs mainly with inertial force of the vehicle in the second state.

Preferably, the vehicle further includes an other driving source generating driving power for running the vehicle.

Preferably, the control device sets a sum of the driving power of the driving source and the other driving source in the first state to be larger than reference driving power of constant output capable of maintaining a speed of the vehicle, and sets a sum of the driving power of the driving source and the other driving source in the second state to be smaller than the reference driving power.

Preferably, the control device performs driving power variation operation on the other driving source in which the other driving source is switched between a third state and a fourth state, the other driving source generating driving power in the third state, the other driving source generating driving power smaller than the driving power in the third state in the fourth state.

Preferably, one of the driving source and the other driving source is a rotating electric machine, and the other of the driving source and the other driving source is an internal combustion engine.

Preferably, both of the driving source and the other driving source are rotating electric machines.

Preferably, the driving source is either a rotating electric machine or an internal combustion engine.

A method of controlling a vehicle according to the present invention is a method of controlling a vehicle including a driving source generating driving power for running. The control method includes the steps of putting the driving source in a first state where the driving source generates driving power of a prescribed level, putting the driving source in a second state where the driving source generates driving power smaller than the driving power in the first state, performing driving power variation operation of switching between the first and second states to run the vehicle when driving power requested by a user varies within a prescribed range, and variably setting a time for the second state in the driving power variation operation in accordance with magnitude of the requested driving power.

### ADVANTAGEOUS EFFECTS OF INVENTION

According to the present invention, energy efficiency during vehicle running can be improved in consideration of a vehicle speed, in a vehicle capable of running by using inertial force of the vehicle with varying driving power.

### BRIEF DESCRIPTION OF DRAWINGS

Fig. 1 is an overall block diagram of a vehicle according to a first embodiment.
Fig. 2 is a time chart illustrating the outline of inertial running control in the first embodiment.
Fig. 3 is a flow chart illustrating a process of the inertial running control performed by an ECU in the first embodiment.
Fig. 4 is a time chart illustrating the outline of inertial running control in a second embodiment.
Fig. 5 is a flow chart illustrating a process of the inertial running control performed by the ECU in the second embodiment.
Fig. 6 is a flow chart illustrating a process of inertial running control performed by the ECU in a variation of the second embodiment.
Fig. 7 is a flow chart illustrating a process of inertial running control performed by the ECU in a third embodiment where an engine is used as a driving source.
Fig. 8 is an overall block diagram of a hybrid vehicle according to a fourth embodiment.
Fig. 9 is a time chart illustrating the outline of inertial running control in the fourth embodiment.
Fig. 10 is an overall block diagram of a vehicle according to a fifth embodiment where two motor generators are used as driving sources.

### DESCRIPTION OF EMBODIMENTS

Embodiments of the present invention will be hereinafter described in detail with reference to the drawings, in which the same or corresponding parts are designated by the same reference characters, and the description thereof will not be repeated.

### [First Embodiment]

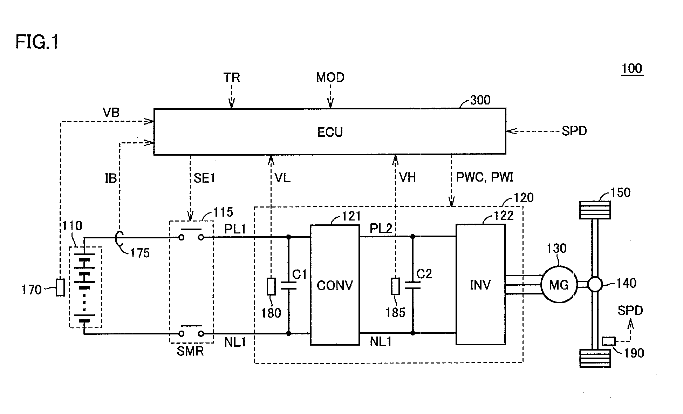

Fig. 1 is an overall block diagram of a vehicle 100 according to a first embodiment of the present invention. As will be described below in detail, vehicle 100 is an electric vehicle or a fuel cell vehicle using a rotating electric machine as a driving source.

Referring to Fig. 1, vehicle 100 includes a power storage device 110, a system main relay (SMR) 115, a PCU (Power Control Unit) 120 which is a driving device, a motor generator 130, a power transmission gear 140, a drive wheel 150, and an ECU (Electronic Control Unit) 300 which is a control device. PCU 120 includes a converter 121, an inverter 122, voltage sensors 180, 185, and capacitors C1, C2.

Power storage device 110 is an electric power storage component configured in a chargeable/dischargeable manner. Power storage device 110 includes a secondary battery such as a lithium-ion battery, a nickel-metal hydride battery or a lead-acid battery, or a power storage element such as an electric double layer capacitor.

Power storage device 110 is connected to PCU 120 through power lines PL1 and NL1. Power storage device 110 supplies PCU 120 with electric power for generating driving power for vehicle 100. Power storage device 110 stores electric power generated by motor generator 130. An output of power storage device 100 is, for example, about 200V.

Power storage device 110 is provided with a voltage sensor 170 and a current sensor 175. Voltage sensor 170 detects a voltage VB of power storage device 110, and outputs a result of the detection to ECU 300. Current sensor 175 detects a current IB input to and output from the power storage device, and outputs the detection values to ECU 300.

SMR 115 includes a relay having one end connected to a positive electrode terminal of power storage device 110 and the other end connected to power line PL1 that is connected to PCU 120, and another relay having one end connected to a negative electrode terminal of power storage device 110 and the other end connected to power line NL1 that is connected to PCU 120. In response to a control signal SE1 from ECU 300, SMR 115 switches between supply and interruption of electric power between power storage device 110 and PCU 120.

In response to a control signal PWC from ECU 300, converter 121 converts a voltage between power lines PL1, NL1 and power lines PL2, NL1.

Inverter 122 is connected to power lines PL2 and NL1. In response to a control signal PWI from ECU 300, inverter 122 converts DC power supplied from converter 121 to AC power, to drive motor generator 130.

Capacitor C1 is provided between power lines PL1 and NL1, and reduces voltage variation between power lines PL1 and NL1. Capacitor C2 is provided between power lines PL2 and NL1, and reduces voltage variation between power lines PL2 and NL1.

Voltage sensors 180 and 185 detect voltages VL and VH across capacitors C1 and C2, respectively, and output the detection values to ECU 300.

Motor generator 130 is an AC rotating electric machine, for example, a permanent magnet synchronous motor including a rotor in which a permanent magnet is embedded.

An output torque of motor generator 130 is transmitted to drive wheel 150 through power transmission gear 140 including a reduction gear and a power split device, to run vehicle 100. During regenerative braking operation of vehicle 100, motor generator 130 can generate electric power by rotation of drive wheel 150. The electric power thus generated is then converted by PCU 120 to charging power for power storage device 110.

A speed sensor 190 is provided in the vicinity of drive wheel 150 so as to detect the speed of vehicle 100 (vehicle speed). Speed sensor 190 detects a vehicle speed SPD based on a rotational speed of drive wheel 150, and outputs the detection value to ECU 300. As a speed sensor, a rotation angle sensor (not shown) for detecting a rotation angle of motor generator 130 may be used. In this case, ECU 300 indirectly computes vehicle speed SPD based on temporal variation in rotation angle of motor generator 130, a reduction ratio and the like.

Although not shown in Fig. 1, ECU 300 includes a CPU (Central Processing Unit), a storage device and an input/output buffer, causes input of signals from various sensors and the like and output of control signals to various devices, and controls the various devices of power storage device 110 and vehicle 100. Such control is not limited to software processing, but may be processed by dedicated hardware (electronic circuitry).

ECU 300 generates and outputs control signals for controlling PCU 120, SMR 115 and the like. Although Fig. 1 shows a configuration where one control device is provided as ECU 300, a separate control device may be provided for each function or for each device to be controlled, such as a control device for PCU 120 and a control device for power storage device 110.

ECU 300 computes an SOC (State of Charge) of power storage device 110 based on the detection values of voltage VB and current IB from voltage sensor 170 and current sensor 175 provided on power storage device 110.

ECU 300 receives a request torque TR, which is determined based on operation of an accelerator pedal (not shown) by a user, from an upper ECU (not shown). ECU 300 generates controls signals PWC and PWI for converter 121 and inverter 122 based on request torque TR from the user, respectively, to drive motor generator 130.

ECU 300 also receives a mode signal MOD which is set by the user. This mode signal MOD is a signal for indicating whether or not inertial running control which will be described later should be performed. Mode signal MOD is switched by a specific switch, setting on an operation screen or the like. Alternatively, mode signal MOD may be automatically set when specific conditions are satisfied.

For example, ECU 300 operates such that the inertial running control is performed when mode signal MOD is set to ON, and operates such that the inertial running control is not performed but normal running is performed when mode signal MOD is set to OFF.

In such a vehicle, the electric power in the power storage device is consumed when driving power is generated by motor generator 130. Since power storage device 110 has a predetermined capacity, there is a need to improve energy efficiency during running to suppress power consumption in order for the vehicle to run the longest distance possible with the electric power stored in the power storage device.

Inertial force acts on a vehicle during vehicle running. Thus, if driving power generated by a motor generator is made lower during running than driving power required to maintain the vehicle speed, running with the inertial force of the vehicle (hereinafter also referred to as "inertial running") is continued for some time while the vehicle speed gradually decreases.

During this inertial running, the motor generator outputs small driving power, thus reducing power consumption by the power storage device. Accordingly, if the vehicle can run utilizing the inertial running, energy efficiency during the vehicle running can be improved.

In the first embodiment, therefore, when the request torque from the user is substantially constant and the vehicle is running at a vehicle speed thereby maintained substantially constant in the vehicle shown in Fig. 1, the inertial running control is performed in which operation of repeating acceleration running with the driving power from the motor generator being in a high output state and inertial running with the driving power from the motor generator being in a low output state (which includes a case where the driving power is zero) (hereinafter also referred to as "driving power variation operation") is performed to run the vehicle, thereby improving energy efficiency during running.

Generally, the effect of vehicle speed variation felt by a driver may vary with the magnitude of vehicle speed. For example, comparing a vehicle speed variation of 5 km/h while the vehicle is running at a relatively low vehicle speed (e.g., 30 km/h) in the city with a vehicle speed variation of 5 km/h while the vehicle is running at a relatively high vehicle speed (e.g., 100 km/h) on an expressway, the driver tends to feel a greater speed variation when driving at the lower vehicle speed even if the variations are the same. In other words, the effect on the driver is less at a higher vehicle speed than at a lower vehicle speed if vehicle speed variation is relatively high.

In the first embodiment, therefore, when the inertial running control such as described above is performed, an acceptable range of vehicle speed which is set in order to switch between acceleration running and inertial running is varied in accordance with an average vehicle speed, namely, request power from the user. As a result, when the vehicle speed is particularly high, a period of time when the inertial running is performed can be further increased without an excessive increase in effect of vehicle speed variation on the user. As such, a period of time when the driving power is in a low output state can be increased to further improve the energy efficiency.

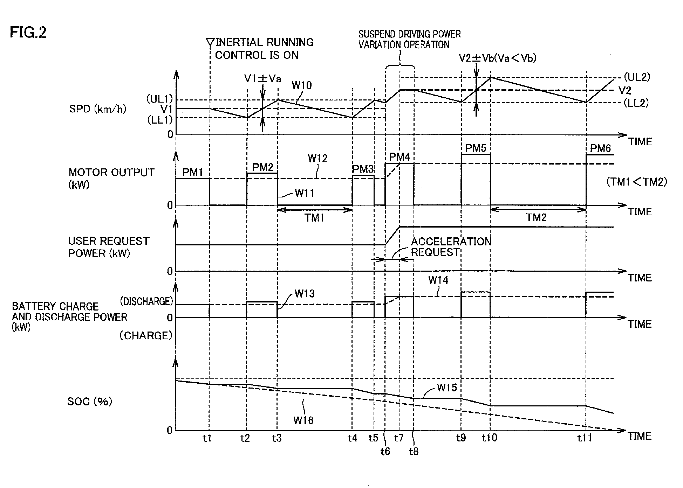

Fig. 2 is a time chart illustrating the outline of inertial running control in the first embodiment. In Fig. 2, a horizontal axis represents time, and a vertical axis represents vehicle speed SPD, the output of the motor generator, the request power from the user, charge and discharge power of the power storage device (battery), and the SOC of the power storage device. Regarding the charge and discharge power of the power storage device, the discharge power is represented as positive value and the charge power is represented as negative value.

Referring to Figs. 1 and 2, it is first assumed that vehicle 100 runs on a flat road at a constant vehicle speed V1 (until time t6). In this case, power requested by the user is given as a substantially constant value, as shown in Fig. 2. That "power requested by the user is a substantially constant value" refers to a state in which the user request power is maintained, although it varies to a degree, within a predetermined range (e.g., ±3%) during a prescribed period of time.

When the inertial running control in the first embodiment is not applied, an output of substantially constant magnitude is continuously provided from motor generator 130, as indicated by a broken line W12 in Fig. 2. As such, vehicle speed SPD is maintained substantially constant.

At this time, power storage device 110 continuously outputs constant electric power as indicated by a broken line W14 in Fig. 2, causing the SOC of power storage device 110 to linearly decrease as indicated by a broken line W16 in Fig. 2.

When an acceleration request is made by the user with an increase in user request power at time t6, motor generator 130 outputs a motor output PM4 to attain a vehicle speed V2 after acceleration. Then, after time t8, motor output PM4 is continuously output so as to maintain vehicle speed V2.

In contrast, when the inertial running control in the first embodiment is applied, basically, acceleration running in which the vehicle runs with prescribed driving power from motor generator 130 and inertial running in which the vehicle runs with driving power smaller than that during the acceleration running are alternately repeated. The inertial running includes a case where the driving power from motor generator 130 is zero, namely, where motor generator 130 is stopped. Fig. 2 illustrates an example where motor generator 130 is stopped during inertial running on a flat road.

Specifically, until time t1, the inertial running control in the first embodiment is not applied, and a motor output PM1 is continuously provided.

When the user indicates that the inertial running control should be performed at time t1, motor generator 130 is stopped first (solid line W11 in Fig. 2). As a result, the driving power from motor generator 130 is stopped, so that running with the inertial force is started and vehicle speed SPD gradually decreases, as indicated by a solid line W10 in Fig. 2.

At this time, the charge and discharge power of power storage device 110 becomes zero, thus suppressing a decrease in SOC.

Then, when vehicle speed SPD decreases to a lower limit value LL1 (V1-Va) of a predetermined acceptable range with respect to target vehicle speed V1 (time t2 in Fig. 2), driving of motor generator 130 is resumed. The motor output at this time is set to PM2 larger than output PM1 required to maintain vehicle speed V1. Vehicle 100 is thus accelerated. During the generation of this driving power, a decrease in SOC is larger than when the inertial running is not performed. Nonetheless, because power is not consumed by the inertial running between times t1 and t2, the total SOC is maintained at a high level (solid line W15 in Fig. 2).

Then, when vehicle speed SPD increases to an upper limit value UL1 (V1+Va) of the above predetermined acceptable range with respect to vehicle speed V1, motor generator 130 is stopped again (time t3 in Fig. 2) and inertial running is performed.

Then, in a similar manner, motor generator 130 is driven when vehicle speed SPD decreases to lower limit value LL1, and motor generator 130 is stopped when vehicle speed SPD increases to upper limit value UL1.

By repeating such driving power variation operation, a decrease in SOC of the power storage device can be suppressed while an average speed of vehicle speed SPD is maintained substantially at V1, although vehicle speed SPD varies within the above acceptable range (V1±Va). As a result, the energy efficiency can be improved as a whole, thereby increasing the distance that can be traveled with the electric power stored in the power storage device.

Then, when an acceleration request is made by the user with an increase in user request power at time t6, the driving power variation operation is suspended, and motor generator 130 outputs motor output PM4 so as to attain vehicle speed V2 after acceleration.

Then, when the acceleration operation by the user ends and vehicle speed SPD becomes constant at V2 (V2>V1), the output from motor generator 130 is stopped again, and the driving power variation operation is resumed so as to maintain vehicle speed V2 (time t8 in Fig. 2).

At this time, upper and lower limit values UL2 and LL2 of an acceptable range of vehicle speed which are used to switch between acceleration running and inertial running are set in accordance with vehicle speed V2 (namely, the user request power) such that the acceptable range is wider than the range at vehicle speed V1. Specifically, upper limit value UL2 is set to V2+Vb, and lower limit value LL2 is set to V2-Vb (Va<Vb). As such, an execution time per inertial running is extended from TM1 to TM2 to increase an amount of reduction of power consumption by the inertial running, thereby improving the energy efficiency.

Although Fig. 2 illustrates an example where the vehicle speed increases by acceleration, if a deceleration request is made by the user, the driving power variation operation is suspended and motor generator 130 is stopped or put in a low output state during the deceleration request. Vehicle 100 is thus decelerated. If the vehicle needs to be decelerated more quickly, regenerative operation may be performed by motor generator 130 to decelerate the vehicle with regenerative braking power.

Then, after the deceleration, the acceptable range of vehicle speed within which the driving power variation operation is performed is set to be narrower than the range before the deceleration.

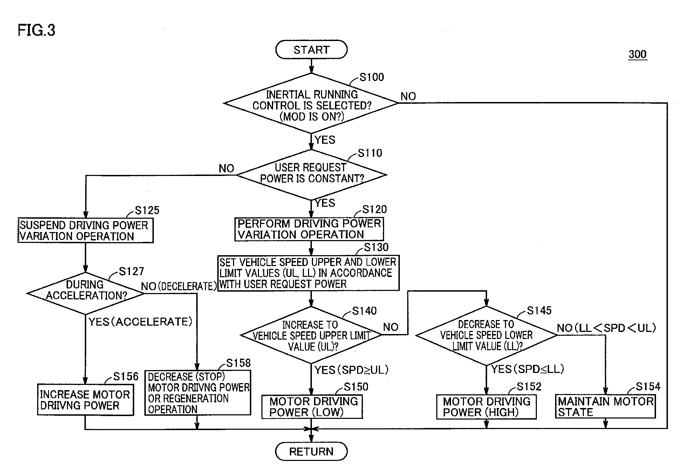

Fig. 3 is a flow chart illustrating a process of the inertial running control performed by ECU 300 in the first embodiment. The steps in the flow charts shown in Fig. 3 and Figs. 5, 6 and 7 described later are implemented by executing a program stored in advance in ECU 300 at regular intervals. Alternatively, processing of part of the steps may be implemented by building dedicated hardware (electronic circuitry).

Referring to Figs. 1 and 3, in step (the step is hereinafter abbreviated as S) 100, ECU 300 determines whether or not the inertial running control has been selected based on mode signal MOD which is set by the user.

If mode signal MOD has been set to OFF and the inertial running control has not been selected (NO in S100), the subsequent processing is skipped and ECU 300 returns the process to a main routine.

If mode signal MOD has been set to ON and the inertial running control has been selected (YES in S100), the process proceeds to S110 where ECU 300 determines whether or not the user request power is substantially constant based on request torque TR.

If the user request power is substantially constant (YES in S110), the process proceeds to S120 where ECU 300 makes a selection such that the driving power variation operation is performed. Although not shown in Fig. 3, immediately after the start of the driving power variation operation, motor generator 130 is initially stopped and inertial running is performed, as shown in Fig. 2.

Then, in S130, ECU 300 sets upper and lower limit values UL and LL of the acceptable range of vehicle speed in accordance with the current user request power.

Then, in S140, ECU 300 determines whether or not vehicle speed SPD has increased to upper limit value UL of the acceptable speed range.

As described above, immediately after the start of the driving power variation operation, motor generator 130 is initially stopped and inertial running is performed. Thus, vehicle speed SPD is lower than upper limit value UL, and gradually decreases.

That is, since vehicle speed SPD has not increased to upper limit value UL of the acceptable speed range (NO in S140), the process proceeds to S145 where ECU 300 determines whether or not vehicle speed SPD has decreased to lower limit value LL of the acceptable speed range.

When vehicle speed SPD is decreasing within the acceptable speed range (LL<SPD<UL), namely, if vehicle speed SPD has not decreased to lower limit value LL of the acceptable speed range (NO in S 145), the process proceeds to S 154 where ECU 300 maintains the current state of motor generator 130 and continues the inertial running. The process then returns to the main routine, and the process is performed again from S100 in the next control cycle.

When vehicle speed SPD decreases to lower limit value LL of the acceptable speed range while the inertial running is continued (SPD≤LL) (YES in S145), the process proceeds to S152 where ECU 300 switches motor generator 130 to a high output state and performs acceleration running. Vehicle speed SPD is thus increased.

While the vehicle speed is increasing within the acceptable speed range by this acceleration running, NO is selected in S140 and S145. Then, in S154, ECU 300 continues the acceleration running until vehicle speed SPD reaches upper limit value UL of the acceptable speed range.

Then, when vehicle speed SPD increases to upper limit value UL of the acceptable speed range (YES in S140), ECU 300 causes switching from the acceleration running to the inertial running. The process then proceeds to S150 where ECU 300 puts motor generator 130 in a low output state and performs the inertial running.

While the user request power is maintained substantially constant, the driving power variation operation as described above is performed so as to maintain vehicle speed SPD within the acceptable speed range.

When the user request power varies for the purpose of acceleration or deceleration (NO in S110), on the other hand, the process proceeds to S125 where ECU 300 suspends the driving power variation operation.

Then, if acceleration is indicated by the user request power (YES in S127), ECU 300 drives motor generator 130 in a power running state and accelerates vehicle 100 (S146).

If deceleration is indicated by the user (NO in S127), on the other hand, the process proceeds to S158 where ECU 300 decelerates the vehicle by inertial running in which motor generator 130 is stopped. If the vehicle needs to be decelerated more quickly, ECU 300 decelerates the vehicle by involving regenerative braking in which motor generator 130 is driven in a regenerative state. Alternatively, ECU 300 may decelerate the vehicle by switching between the deceleration by inertial running and the deceleration involving regenerative braking.

Then, when the acceleration or deceleration operation by the user ends and the user request power becomes substantially constant (YES in S110), the driving power variation operation is resumed. At this time, as described above, in S130, ECU 300 sets upper and lower limit values UL and LL of the acceptable range of vehicle speed again in accordance with the user request power that has been varied by the acceleration or deceleration, and performs the driving power variation operation in accordance with thus set upper and lower limit values UL and LL.

By performing the control in accordance with the process as described above, when the user request power is substantially constant, the driving power variation operation of repeating inertial running and acceleration running can be performed. If the vehicle speed is varied to a constant vehicle speed of a different value by an acceleration request or deceleration request from the user, the acceptable range of vehicle speed within which the driving power variation operation is performed is variably set in accordance with the user request power. As a result, the energy efficiency during the vehicle running can be improved while an increase in effect of the vehicle speed variation on the user is suppressed.

### [Second Embodiment]

In the first embodiment, the configuration where the setting of the acceptable range of vehicle speed within which the driving power variation operation is performed is changed in accordance with the user request power was described.

In a second embodiment, a configuration where an execution time for the inertial running is variably set in accordance with the user request power, instead of changing the setting of the acceptable range of vehicle speed (upper and lower limit values), will be described.

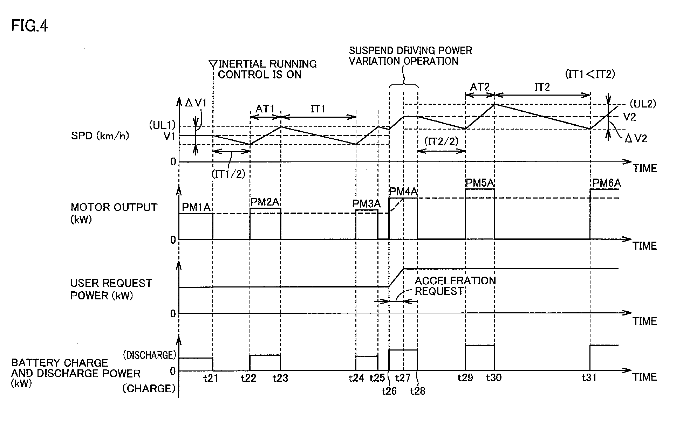

Fig. 4 is a time chart illustrating the outline of inertial running control in the second embodiment.

In Fig. 4, an acceptable range of vehicle speed within which the driving power variation operation is performed is not explicitly set, but an inertial running time IT is set in accordance with the user request power. Specifically, as shown in Fig. 4, when a vehicle speed corresponding to the user request power is V1, the inertial running time is set to IT1. When the vehicle speed becomes V2 (V1<V2) by an acceleration request from the user, the inertial running time is set to IT2 (IT1<IT2). Then, in response to a lapse of this inertial running time, switching takes place from the inertial running to the acceleration running.

Switching from the acceleration running to the inertial running is done with the following method.

Deceleration in a low output state can be determined from the driving power of the motor generator which was set in the low output state. Thus, when inertial running time IT is thus set, a decrease ΔV in vehicle speed during that inertial running time can be calculated. Then, a half of this decrease ΔV is added to a target average vehicle speed V which is determined from the user request power, to determine upper limit value UL of the vehicle speed. Then, in response to an increase in vehicle speed SPD to this upper limit value UL, operation of the motor generator is switched from the acceleration running to the inertial running.

In this manner, the driving power variation operation is performed using inertial running time IT and upper limit value UL determined by inertial running time IT.

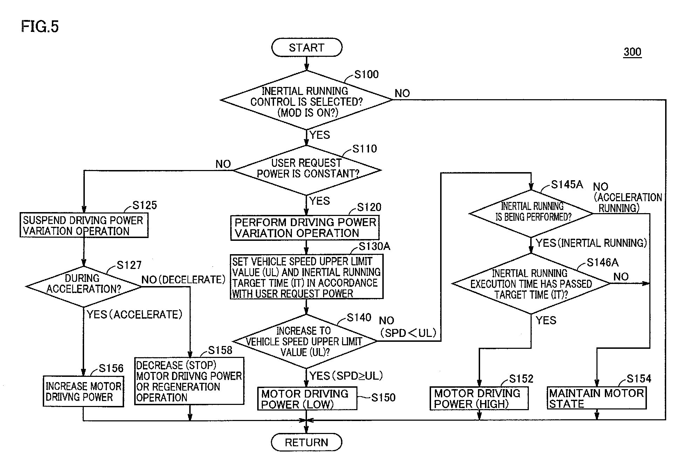

Fig. 5 is a flow chart illustrating a process of the inertial running control performed by ECU 300 in the second embodiment. In Fig. 5, steps S130 and S145 in the flow chart of Fig. 3 in the first embodiment are replaced by S130A and S145A, respectively, and step S146A is added. The descriptions of the steps in Fig. 5 the same as those in Fig. 3 will not be repeated.

Referring to Figs. 1 and 5, if the inertial running control is selected by the user (YES in S100) and if it is determined that the user request power is substantially constant (YES in S110), ECU 300 starts performing the driving power variation operation in S120. Then, in S130A, ECU 300 sets target time IT for inertial running in accordance with the user request power, and sets vehicle speed upper limit value UL from thus set inertial running time IT.

Then, if vehicle speed SPD has not increased to upper limit value UL (NO in S140), the process proceeds to S145A where ECU 300 determines whether or not the inertial running is currently being performed.

If the inertial running is being performed (YES in S145A), the process proceeds to S 146A where ECU 300 determines whether or not an execution time for the inertial running has passed target time IT which was set in S130A.

If the inertial running execution time has not passed target time IT (NO in S 146A), the process proceeds to S 154 where ECU 300 maintains the current state of motor generator 130 and continues the inertial running.

If the inertial running execution time has passed target time IT (YES in S 146A), on the other hand, ECU 300 ends the inertial running, and in S152, puts motor generator 130 in a high output state and switches to acceleration running.

Until vehicle speed SPD reaches upper limit value UL, NO is selected in S140 and S145, and ECU 300 maintains the state of motor generator 130 and continues the acceleration running. Then, when vehicle speed SPD increases to upper limit value UL (YES in S140), the process proceeds to S150 where ECU 300 puts motor generator 130 in a low output state and switches to inertial running.

By performing the control in accordance with the process as described above, a ratio of the time when the inertial running is performed can be increased particularly when the user request power is high, to thereby improve the energy efficiency. In such a configuration where the switching between inertial running and acceleration running is directly set based on time, the adjustment can be advantageously readily made to adapt to driving feeling of the driver.

### (Variation)

In the configuration described above, the switching from acceleration running to inertial running takes place based on the upper limit value which is calculated from an estimated value of the decrease in vehicle speed during the period of inertial running.

In a variation of the second embodiment, a case where the switching from acceleration running to inertial running is set based on an execution time for the acceleration running is described.

In such a configuration, the times for acceleration running and inertial running can be adjusted, so that the adjustment can be advantageously more readily adapted to driving feeling of the driver. Meanwhile, however, the vehicle speed may gradually increase or decrease depending on the driving power of the motor generator during acceleration running, resulting in inability to maintain the vehicle speed constant. It should therefore be noted that the driving power of the motor generator during acceleration running needs to be set appropriately.

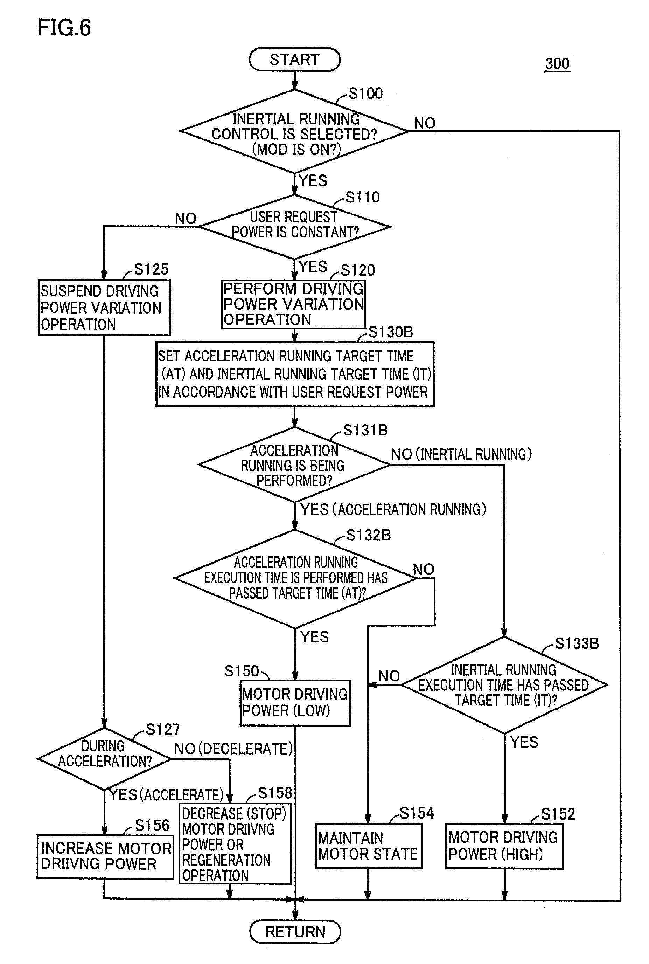

Fig. 6 is a flow chart illustrating a process of the inertial running control performed by ECU 300 in the variation of the second embodiment. In Fig. 6, steps S130B, S131B, S132B and S 133B are added in place of S130A, S140A, S 145A and S146A in the flow chart of Fig. 5. The descriptions of the steps in Fig. 6 the same as those in Figs. 3 and 5 will not be repeated.

Referring to Figs. 1 and 6, if a selection is made such that the driving power variation operation is performed in S120, in S130B, ECU 300 sets a target time AT for acceleration running and target time IT for inertial running in accordance with the user request power. Furthermore, in S130B, ECU 300 sets the driving power of motor generator 130 during acceleration running such that an increase in vehicle speed SPD during the period of acceleration running is equal to a decrease in vehicle speed SPD during the period of inertial running.

Then, in S131B, ECU 300 determines whether or not vehicle 100 is currently performing the acceleration running.

If vehicle 100 is not performing the acceleration running, namely, is performing the inertial running (NO in S 131B), the process proceeds to S 133B where ECU 300 determines whether or not the inertial running execution time has passed target time IT which was set in S130B.

If it has not passed target time IT (NO in S 13 3B), the process proceeds to S 154 where ECU 300 maintains the current state of motor generator 130 and continues the inertial running. If it has passed target time IT (YES in S133B), on the other hand, the process proceeds to S152 where ECU 300 ends the inertial running and performs acceleration running with the driving power which was set in S131B.

If vehicle 100 is performing the acceleration running in S 131B (YES in S 131B), the process proceeds to S 13 2B where ECU 300 determines whether or not the acceleration running execution time has passed target time AT which was set in S131B.

If it has not passed target time AT (NO in S132B), the process proceeds to S154 where ECU 300 maintains the current state of motor generator 130 and continues the acceleration running. If it has passed target time AT (YES in S132B), on the other hand, the process proceeds to S150 where ECU 300 ends the acceleration running, and puts motor generator 130 in a low output state and switches to inertial running.

By performing the control in accordance with the process as described above, a ratio of the time when the inertial running is performed can be increased in accordance with the user request power, to improve the energy efficiency during running.

### [Third Embodiment]

In the first and second embodiments, the electric vehicle including the motor generator as a driving source was described by way of example. The driving power variation control described above is also applicable to a vehicle including an engine which is an internal combustion engine as a driving source.

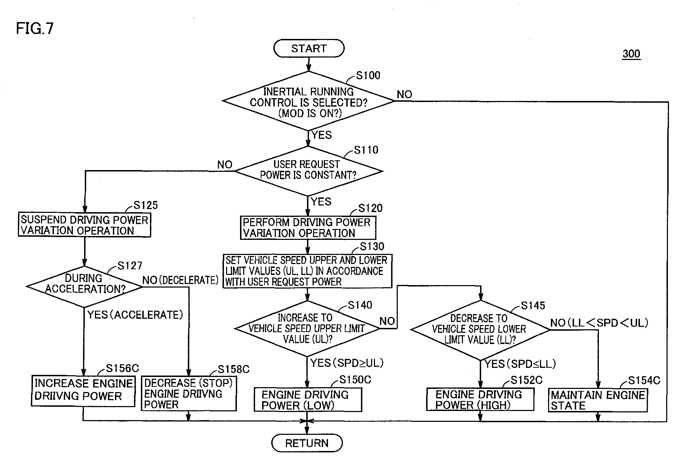

Fig. 7 is a flow chart illustrating a process of inertial running control performed by ECU 300 in a third embodiment where an engine is provided as a driving source. In Fig. 7, steps S150, S152, S154, S156 and S158 in the flowchart of Fig. 3 in the first embodiment are replaced by S150A, S152A, S154A, S156A and S158A, respectively. The only difference in the processing of the replaced steps is that the driving power is output from the engine instead of from the motor generator, and the contents of the process are otherwise similar to those in Fig. 3. Thus, the detailed descriptions of the contents of the process will not be repeated. Generally, the inertial running control is selected, and when the user request power is constant, the engine is switched to a high output state and acceleration running is performed when the vehicle speed decreases to the lower limit value, and the engine is switched to a low output state and inertial running is performed when the vehicle speed increases to the upper limit value. In so doing, the acceptable range of vehicle speed within which the driving power variation operation is performed is varied in accordance with the user request power (S130).

In this manner, in the vehicle using the engine as a driving source, gasoline mileage can be increased by the inertial running control while an increase in effect of vehicle speed variation on the user is suppressed.

The configurations in the second embodiment and its variation are also applicable to the third embodiment where the engine is provided as a driving source.

During the inertial running, the engine may be stopped, or may be put in a low output state such as an idle state. When an engine serves as a driving source, the engine needs to be cranked at startup. Thus, if the engine is stopped whenever the inertial running is performed, the energy efficiency may indeed decline because of energy required for the startup. Therefore, if the energy efficiency is higher when the operation of the engine is continued during inertial running than when the engine is started whenever the inertial running is performed, the operation of the engine may be continued in a low output state during the inertial running.

### [Fourth Embodiment]

In the first to third embodiments, the inertial running control in which a single motor generator or engine is provided as a driving source was described.

In a fourth embodiment, an example of application of the inertial running control to a hybrid vehicle incorporating an engine in addition to a motor generator will be described.

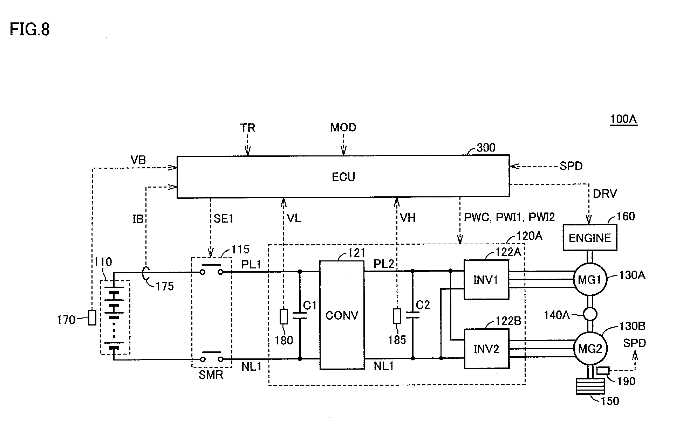

Fig. 8 is an overall block diagram of a hybrid vehicle 100A according to the fourth embodiment. In Fig. 8, PCU 120 in Fig. 1 is replaced by a PCU 120A, and motor generator 130 is replaced by motor generators 130A, 130B and engine 160 as driving sources. The descriptions of the elements in Fig. 8 the same as those in Fig. 1 will not be repeated.

Referring to Fig. 8, PCU 120A includes converter 121, inverters 122A, 122B, capacitors C1, C2, and voltage sensors 180, 185.

Inverters 122A and 122B are connected in parallel to converter 121 through power lines PL2 and NL1.

Inverter 122A is controlled by a control signal PW11 from ECU 300, and converts DC power from converter 121 to AC power, to drive motor generator 130A (hereinafter also referred to as an "MG1"). Inverter 122A also converts AC power generated by motor generator 130A to DC power, to charge power storage device 110 through converter 121.

Inverter 122B is controlled by a control signal PWI2 from ECU 300, and converts DC power from converter 121 to AC power, to drive motor generator 130B (hereinafter also referred to as an "MG2"). Inverter 122B also converts AC power generated by motor generator 130B to DC power, to charge power storage device 110 through converter 121.

Motor generators 130A and 130B have output shafts coupled to a power transmission gear 140A including a power split device such as a planetary gear. Driving power from motor generators 130A and 130B is transmitted to drive wheel 150.

Motor generators 130A and 130B are coupled to engine 160 through power transmission gear 140A. Engine 160 is controlled by a control signal DRV from ECU 300. Driving power generated by engine 160 is transmitted to drive wheel 150 and motor generator 130A through power transmission gear 140A. ECU 300 cooperatively controls driving power generated by motor generators 130A, 130B and engine 160, to run the vehicle.

In the fourth embodiment, motor generator 130A is used exclusively as a starter motor when starting engine 160 and as a generator for generating electric power by being driven by engine 160. Motor generator 130B is used exclusively as a motor for driving drive wheel 150 by using the electric power from power storage device 110.

Although Fig. 8 shows an exemplary configuration where two motor generators and one engine are provided, the number of motor generators is not limited as such. For example, one motor generator may be provided. Alternatively, more than two motor generators may be provided.

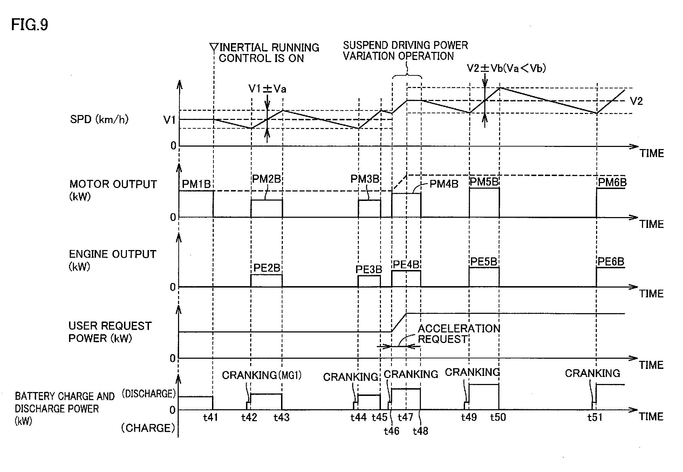

Fig. 9 is a time chart illustrating the outline of inertial running control in the fourth embodiment. Fig. 9 shows an output of engine 160 instead of showing the SOC in Fig. 2 of the first embodiment. The driving power is allotted to motor generator 130B and engine 160 such that the driving power required during acceleration running is a sum of the driving power output from motor generator 130B and the driving power output from engine 160.

In other words, the sum of the driving power output from motor generator 130B and the driving power output from engine 160 is set to be larger than the driving power required to maintain vehicle speed SPD during acceleration running.

A ratio of the driving power allocated to motor generator 130B and engine 160 is set appropriately in consideration of their energy efficiency, response or the like.

In Fig. 9, engine 160 is stopped during inertial running, and engine 160 is cranked and started by motor generator 130A (MG1) immediately before the start of acceleration running. Alternatively, the operation of engine 160 may be continued in an idle state during inertial running. Whether to stop engine 160 or perform idle operation of engine 160 during inertial running is determined by a comparison between energy required to continue the idle operation and energy required to start engine 160.

Furthermore, when the SOC of power storage device 110 decreases in hybrid vehicle 100A as shown in Fig. 8, motor generator 130A may be driven by engine 160 to perform operation of electric power generation, to charge power storage device 110 with the thus generated electric power.

In such hybrid vehicle 100A, too, the energy efficiency can be improved by variably setting the acceptable range of vehicle speed within which the driving power variation operation is performed in accordance with the user request power, and by increasing the acceptable range as the user request power increases, as in the first embodiment.

In the fourth embodiment, too, the inertial running execution time may be changed in accordance with the user request power instead of variably setting the acceptable range of vehicle speed, by adopting the configurations in the second embodiment and its variation.

### [Fifth Embodiment]

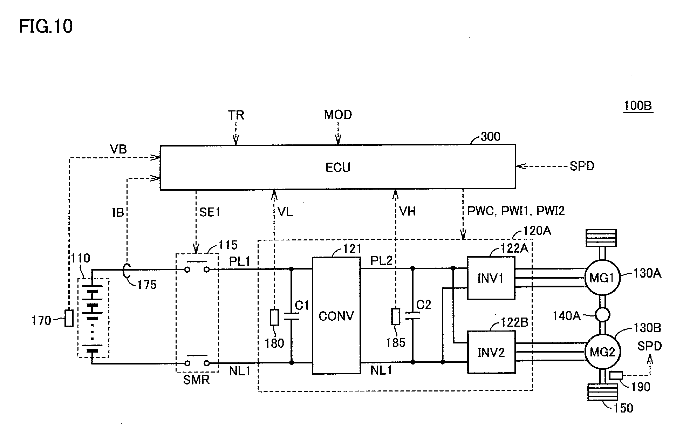

In the fourth embodiment above, the hybrid vehicle including the engine and the motor generator as a plurality of driving sources was described by way of example. The present invention is also applicable to vehicles having other configurations, such as an electric vehicle having a twin motor configuration capable of running with driving power from two motor generators as a plurality of driving sources, as shown in Fig. 10, for example.

A vehicle 100B in Fig. 10 has the configuration of vehicle 100A in Fig. 8 which is not provided with engine 160. Vehicle 100B runs with driving power from both motor generator 130A (MG1) and motor generator 130B (MG2).

In this case, although power storage device 110 cannot be charged with motor generator 130A (MG1) as in the fourth embodiment, the driving power variation operation can be performed by replacing the driving power of engine 160 with an output of MG1 in Fig. 9 of the fourth embodiment.

The present invention is also applicable to an example where MG1 is used as a motor rather than as a generator and the vehicle runs with driving power generated by three driving sources of MG1, MG2 and engine 160, in the configuration of Fig. 8 in the fourth embodiment.

Although the examples where the driving power during inertial running becomes zero were described in the time charts of Figs. 2, 4 and 9 in the aforementioned embodiments, low driving power which is not zero may be output so as to adjust deceleration during inertial running, or deceleration may be increased by regenerative operation of the motor generator on a downward slope, for example.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### REFERENCE SIGNS LIST

100, 100A, 100B vehicle; 110 power storage device; 115 SMR; 120 PCU; 121 converter; 122, 122A, 122B inverter; 130, 130A, 130B motor generator; 140, 140A power transmission gear; 150 drive wheel; 160 engine; 170, 180, 185 voltage sensor; 175 current sensor; 190 speed sensor; 300 ECU; C1, C2 capacitor; PL1, PL2, NL1 power line.

## Claims

1. A vehicle comprising:
a driving source (130, 130B, 160) generating driving power for running the vehicle (100, 100A, 100B); and
a control device (300) for controlling the driving source (130, 130B, 160),
the control device (300) performing driving power variation operation on the driving source (130, 130B, 160) in which the driving source is switched between a first state and a second state when driving power requested by a user varies within a prescribed range to run the vehicle (100, 100A, 100B), the driving source generating driving power in the first state, the driving source generating driving power smaller than the driving power in the first state in the second state,
the control device (300) variably setting a time for the second state in the driving power variation operation in accordance with magnitude of the requested driving power.

2. The vehicle according to claim 1, wherein
the control device (300) controls the driving source such that the time per the second state is longer as the requested driving power increases.

3. The vehicle according to claim 2, wherein
the control device (300) causes switching between the first and second states so as to maintain a speed of the vehicle (100, 100A, 100B) within an acceptable range while the driving power variation operation is performed, and
the control device (300) sets the acceptable range to be wider as the requested driving power increases.

4. The vehicle according to claim 3, wherein
the control device (300) causes switching to the first state in response to a decrease in the speed of the vehicle (100, 100A, 100B) to a lower limit value of the acceptable range, and causes switching to the second state in response to an increase in the speed of the vehicle (100, 100A, 100B) to an upper limit value of the acceptable range.

5. The vehicle according to claim 2, wherein
the control device (300) causes switching from the second state to the first state in response to continuation of the second state for a predetermined time, and
the control device (300) sets the predetermined time for the second time to be longer as the requested driving power increases.

6. The vehicle according to claim 5, wherein
the control device (300) causes switching from the first state to the second state in response to an increase in a speed of the vehicle (100, 100A, 100B) to an upper limit value of a target speed determined based on the requested driving power.

7. The vehicle according to claim 6, wherein
the control device (300) causes switching between the first and second states so as to maintain the speed of the vehicle (100, 100A, 100B) within an acceptable range while the driving power variation operation is performed, and
the control device (300) causes switching from the first state to the second state in response to continuation of the first state for a prescribed time determined from an execution time of the second state.

8. The vehicle according to claim 1, wherein
the driving power in the first state is set to be larger than reference driving power of constant output capable of maintaining a speed of the vehicle (100, 100A, 100B), and
the driving power in the second state is set to be smaller than the reference driving power.

9. The vehicle according to claim 8, wherein
the control device (300) stops the generation of the driving power from the driving source (130, 130B, 160) in the second state.

10. The vehicle according to claim 8, wherein
the vehicle (100, 100A, 100B) runs mainly with inertial force of the vehicle (100, 100A, 100B) in the second state.

11. The vehicle according to claim 1, further comprising an other driving source (160, 130A) generating driving power for running the vehicle (100A, 100B).

12. The vehicle according to claim 11, wherein
the control device (300) sets a sum of the driving power of the driving source (130B, 160) and the other driving source (160, 130A) in the first state to be larger than reference driving power of constant output capable of maintaining a speed of the vehicle (100, 100A, 100B), and sets a sum of the driving power of the driving source (130B, 160) and the other driving source (160, 130A) in the second state to be smaller than the reference driving power.

13. The vehicle according to claim 12, wherein
the control device (300) performs driving power variation operation on the other driving source (160, 130A) in which the other driving source is switched between a third state and a fourth state, the other driving source generating driving power in the third state, the other driving source generating driving power smaller than the driving power in the third state in the fourth state.

14. The vehicle according to claim 11, wherein
one of the driving source and the other driving source is a rotating electric machine (130B; 160), and
the other of the driving source and the other driving source is an internal combustion engine (160; 130B).

15. The vehicle according to claim 11, wherein
both of the driving source and the other driving source are rotating electric machines (130A, 130B).

16. The vehicle according to claim 1, wherein
the driving source is either a rotating electric machine (130) or an internal combustion engine (160).

17. A method of controlling a vehicle including a driving source (130, 130B, 160) generating driving power for running, comprising the steps of:
putting the driving source (130, 130B, 160) in a first state where the driving source generates driving power of a prescribed level;
putting the driving source (130, 130B, 160) in a second state where the driving source generates driving power smaller than the driving power in the first state;
performing driving power variation operation of switching between the first and second states to run the vehicle (100, 100A, 100B) when driving power requested by a user varies within a prescribed range; and
variably setting a time for the second state in the driving power variation operation in accordance with magnitude of the requested driving power.
